(19) Europäisches Patentamt
European Patent Office
Office européen des brevets

(11) **EP 4 787 016 A1**

(12) **EUROPEAN PATENT APPLICATION**
published in accordance with Art. 153(4) EPC

(43) Date of publication:
**05.08.2026 Bulletin 2026/32**

(21) Application number: **23954124.6**

(22) Date of filing: **25.09.2023**

(51) International Patent Classification (IPC):
***G01S 13/42*** *(2006.01)* ***G01S 7/41*** *(2006.01)*

(52) Cooperative Patent Classification (CPC):
**G01S 7/41; G01S 13/42**

(86) International application number:
**PCT/JP2023/034758**

(87) International publication number:
**WO 2025/069147 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Pioneer Corporation
Tokyo 113-0021 (JP)**

(72) Inventors:
• **MINOSHIMA, Kunihiro
Kawagoe-shi, Saitama 350-8555 (JP)**
• **FUJIE, Tetsuya
Kawagoe-shi, Saitama 350-8555 (JP)**
• **KOBAYASHI, Nobuaki
Kawagoe-shi, Saitama 350-8555 (JP)**
• **SUZUKI, Katsunori
Kawagoe-shi, Saitama 350-8555 (JP)**

(74) Representative: **Hoffmann Eitle
Patent- und Rechtsanwälte PartmbB
Arabellastraße 30
81925 München (DE)**

(54) **MONITORING DEVICE, MONITORING METHOD AND MONITORING PROGRAM**

(57) A monitoring device (100) includes an acquisition unit (121) that acquires an intensity of a signal that has been received by a motion sensor that is provided in an interior of a vehicle, and the coordinates of a moving object that has been specified based on information that has been detected by the motion sensor, and a determination unit (122) that determines that the moving object is an object that is not to be detected in a case where a standard deviation of the intensity of the signal acquired by the acquisition unit (121) is less than a threshold, and also, in a case where a standard deviation of a movement distance is less than a threshold.

FIG.2

**Description**

Field

The present invention relates to a monitoring device, a monitoring method, and a monitoring program. Background

Conventionally, there is a technology for avoiding an incorrect report by accurately distinguishing between an object, such as a human body, that is to be detected and an object that is not to be detected (for example, a tree, a plant, or the like swaying in the wind) with respect to a microwave sensor that has been configured to detect objects by using a microwave (for example, Patent Literature 1).

Citation List

Patent Literature

Patent Literature 1: Japanese Laid-open Patent Publication No. 2003-207462

Summary

Technical Problem

However, in the conventional technology, there may be a case in which it is not possible to determine with high accuracy the object that is not to be detected. For example, in a case where a movement of a person, who is the object to be detected, is small or is at a distance, there may possibly be erroneously detect that an object that is a person and that is to be detected as an object that is not to be detected. In this way, the problem described above is one example of the technical problem to be solved by the present invention.

Solution to Problem

A monitoring device according to claim 1 includes an acquisition unit that acquires an intensity of a signal that has been received by a motion sensor that is provided in an interior of a vehicle, and the coordinates of a moving object that has been specified based on information that has been detected by the motion sensor; and a determination unit that determines that the moving object is an object that is not to be detected in a case where a standard deviation of the intensity of the signal acquired by the acquisition unit is less than a threshold, and also, in a case where a standard deviation of a movement distance is less than a threshold.

A monitoring method according to claim 4 is a method executed by a monitoring device, the method comprising an acquiring step of acquiring an intensity of a signal that has been received by a motion sensor provided in an interior of a vehicle and the coordinates of a moving object that has been specified based on information that has been detected by the motion sensor; and a determining step of determining that the moving object is an object that is not to be detected in a case where a standard deviation of the intensity of the signal acquired at the acquiring step is less than a threshold, and also, in a case where a standard deviation of a movement distance is less than a threshold.

A monitoring program according to claim 5 causes a computer to execute a process, the process including an acquiring step of acquiring an intensity of a signal that has been received by a motion sensor provided in an interior of a vehicle and the coordinates of a moving object that has been specified based on information that has been detected by the motion sensor; and a determining step of determining that the moving object is an object that is not to be detected in a case where a standard deviation of the intensity of the signal acquired at the acquiring step is less than a threshold, and also, in a case where a standard deviation of a movement distance is less than a threshold.

Brief Description of Drawings

FIG. 1 is a diagram illustrating one example of a configuration of a monitoring device system according to an embodiment.
FIG. 2 is a diagram illustrating one example of a configuration of a monitoring device according to the embodiment.
FIG. 3 is a diagram illustrating one example of an installation location of a motion sensor according to the embodiment.
FIG. 4 is a diagram illustrating one example of a determination process performed by the monitoring device according to the embodiment.

FIG. 5 is a diagram illustrating one example of a determination process performed by the monitoring device according to the embodiment.

FIG. 6 is a diagram illustrating a changing process performed by the monitoring device according to the embodiment.

FIG. 7 is a flowchart illustrating one example of the flow of a process performed by the monitoring device according to the embodiment.

FIG. 8 is a diagram illustrating one example of a determination process performed by the monitoring device according to the embodiment.

FIG. 9 is a diagram illustrating one example of the determination process performed by the monitoring device according to the embodiment.

FIG. 10 is a diagram illustrating one example of the determination process performed by the monitoring device according to the embodiment.

FIG. 11 is a diagram illustrating one example of the determination process performed by the monitoring device according to the embodiment.

FIG. 12 is a flowchart illustrating one example of the flow of a process performed by the monitoring device according to the embodiment.

FIG. 13 is a flowchart illustrating one example of the flow of a process performed by the monitoring device according to the embodiment.

FIG. 14 is a flowchart illustrating one example of the flow of a process performed by the monitoring device according to the embodiment.

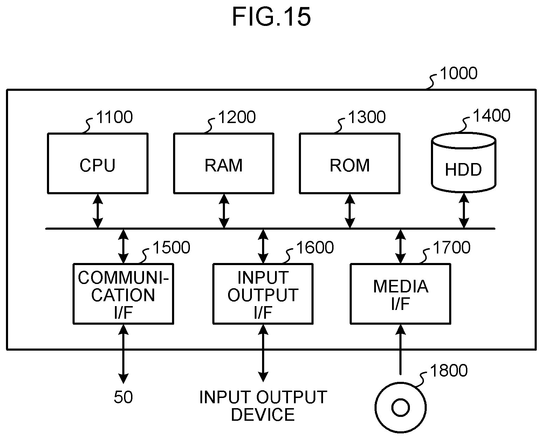

FIG. 15 is a diagram illustrating one example of a hardware configuration of a computer that implements a function of the monitoring device.

Description of Embodiments

Hereinafter, modes for carrying out the present invention (hereinafter, referred to as an embodiment) will be explained with reference to the accompanying drawings. Furthermore, the present invention is not limited by the embodiments described below. In addition, the same reference numerals are assigned to the same components in the drawings.

[First Embodiment]

[1. Configuration of system]

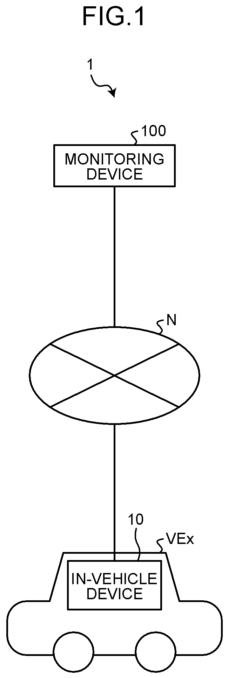

First, a configuration of a monitoring system according to an embodiment will be described with reference to FIG. 1. FIG. 1 is a diagram illustrating a configuration of the monitoring system according to the embodiment. In FIG. 1, a monitoring system 1 is illustrated as one example of the monitoring system according to the embodiment.

As illustrated in FIG. 1, the monitoring system 1 may include an in-vehicle device 10 and a monitoring device 100. Furthermore, the in-vehicle device 10 and the monitoring device 100 are communicably connected via a network N in a wired or wireless manner. Furthermore, in the monitoring system 1 illustrated in FIG. 1, an arbitrary number of the in-vehicle devices 10 and an arbitrary number of the monitoring devices 100 may be included.

The in-vehicle device 10 may be a dedicated sensor device that is built in a vehicle VEx or that is externally provided, or may be a device, such as a video recording device (drive recorder), that is installed in the vehicle VEx for crime prevention or countermeasures against tailgating.

Furthermore, the in-vehicle device 10 may be constituted by both of a sensor device and a notification device. As one example of this, the in-vehicle device 10 may be a composite device that has been constituted such that the sensor device and the notification device that are independent of each other are communicably connected each other. Furthermore, as another example, the in-vehicle device 10 may be a single device that has both of a sensor function and a notification function.

Furthermore, a user may connect a predetermined sensor to a portable type terminal device (for example, a smartphone, a tablet type terminal, a notebook type PC, a desktop type PC, a PDA, or the like) that is used by the user on a daily basis and installing a predetermined application software in the portable type terminal device, whereby the user is able to use the portable type terminal device as a substitute for the in-vehicle device 10. For example, the portable type terminal device that includes the predetermined sensor or to which the predetermined sensor is connected is also able to be referred to as the in-vehicle device 10. In a case where the portable type terminal device is utilized as the in-vehicle device 10, the portable type terminal device is installed on, for example, a dashboard of the vehicle VEx at the time of driving of the vehicle VE.

Furthermore, the in-vehicle device 10 may include various kinds of sensors. For example, the in-vehicle device 10 may include various kinds of sensors, such as a distance sensor, a microwave sensor, a motion sensor, such as a light detection and ranging (LiDAR), a temperature sensor, a microphone, a GPS sensor, an acceleration sensor, a gyro sensor, a camera, and an atmospheric pressure sensor.

The monitoring device 100 may acquire various kinds of data on the basis of the sensor information that has been detected by the above described sensors (for example, by analyzing sensor information). For example, the monitoring device 100 acquires information on a moving object that is present inside or outside the vehicle from the motion sensor. Furthermore, for example, the monitoring device 100 acquires a temperature in the interior of a vehicle from the temperature sensor. Furthermore, for example, the monitoring device 100 acquires a sound from a microphone. Furthermore, for example, the monitoring device 100 acquires an angular velocity from a gyro sensor. Furthermore, for example, the monitoring device 100 acquires data on a moving image obtained by capturing an outside from the interior of the vehicle VEx by the camera. Moreover, the monitoring device 100 may acquire sensor information that has been detected by a sensor provided in the vehicle VEx, in addition to the sensor provided in the in-vehicle device 10.

The monitoring device 100 is a device that determines an object that is not to be detected. Conventionally, monitoring of a vehicle that is being parked is performed with an aim to prevent crimes, such as car theft or car break-in, against the vehicle that is being parked. In the device or the like that performs such monitoring of the vehicle that is being parked, it is configured to detect a person who commits an approach to a vehicle that is being parked or a peep into a vehicle that is being parked as an object that is to be detected, but, in a case where a plant, such as grass or a tree, and an object, such as a banner or a flag, that are not to be detected and that are described above as one example are present in the vicinity of the vehicle that is being parked, there may be a case in which the device erroneously detects that a person, who corresponds to an object that is to be detected, is present. Accordingly, the monitoring device 100 prevents an erroneous detection by determining with high accuracy the object that is not to be detected and that is present in the vicinity of the vehicle that is being parked.

For example, the monitoring device 100 determines that the moving object is an object that is not to be detected in a case where each of a standard deviation of an intensity of a signal that has been received by the motion sensor provided in the interior of a vehicle and a standard deviation of the coordinates of a moving object that has been specified on the basis of the information that has been detected by the motion sensor is less than a threshold. Furthermore, for example, the monitoring device 100 determines whether or not the moving object is an object that is not to be detected, on the basis of the coordinates of the moving object that has been specified on the basis of the information detected by the motion sensor that is provided in the interior of a vehicle.

Here, if it is assumed that the in-vehicle device 10 is an edge computer that performs an edge process in the vicinity of the user, the monitoring device 100 may be, for example, a cloud computer that performs a process on a cloud side. In other words, the monitoring device 100 may be a server device.

Furthermore, in the embodiment described below, an example in which the monitoring according to the embodiment is implemented in the monitoring system 1 as a result of transmission and reception of information being performed between the in-vehicle device 10 and the monitoring device 100 will be described. However, the monitoring according to the embodiment may be implemented only on the edge side, that is, only in the in-vehicle device 10. In this case, the in-vehicle device 10 may be configured to act as the monitoring device 100 by, for example, a monitoring program according to the embodiment.

[2. Configuration of monitoring device]

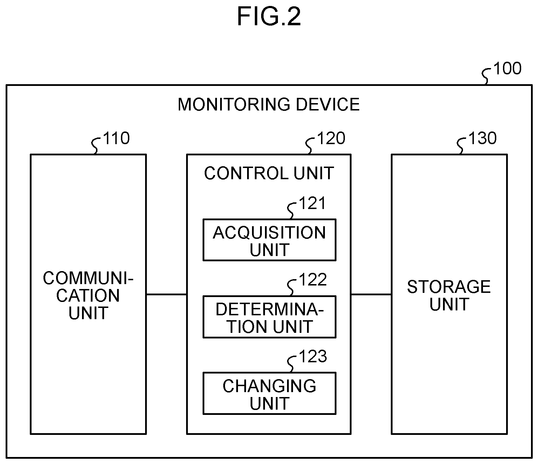

In the following, the monitoring device 100 according to the embodiment will be described with reference to FIG. 2. FIG. 2 is a diagram illustrating an example of a configuration of the monitoring device 100 according to the embodiment. As illustrated in FIG. 2, the monitoring device 100 includes a communication unit 110, a storage unit 130, and a control unit 120. In the following, each of the units included in the monitoring device 100 will be described.

The communication unit 110 is implemented by, for example, a network interface card (NIC), or the like. The communication unit 110 is connected to the network N in a wired or wireless manner, and sends and receives information to and from, for example, the in-vehicle device 10.

The storage unit 130 is implemented by, for example, a semiconductor memory device, such as a random access memory (RAM) or a flash memory, or a storage device, such as a hard disk or an optical disk. The storage unit 130 stores therein information, such as the location in which the motion sensor is installed, the intensity of the signal to be transmitted, the sensitivity of the signal to be received, the intensity of the signal that has been received, the angle and the distance that are calculated from the received signal, the coordinates of the moving object, or the other information that is needed to determine an object that is not to be detected.

The control unit 120 is implemented by using a Central Processing Unit (CPU), a Network Processor (NP), or a Field Programmable Gate Array (FPGA), and performs a processing program that is stored in the memory. As illustrated in FIG. 2, the control unit 120 includes an acquisition unit 121, a determination unit 122, and a changing unit 123. In the following, each of the units included in the control unit 120 will be described.

The acquisition unit 121 acquires both of the intensity of the signal that has been received by the motion sensor that is provided in the interior of a vehicle, and the coordinates of the moving object that has been specified on the basis of the information that has been detected by the motion sensor. For example, the acquisition unit 121 acquires both of the intensity of the signal that has been received by the motion sensor that is provided in the interior of a vehicle and the coordinates of the moving object that has been specified from the information on the distance and the angle that are detected by the motion sensor. At this time, two or more motion sensors may be provided. For example, the acquisition unit 121 acquires both of the intensity of the signal that has been received by each of the plurality of motion sensors that are provided in the interior of the vehicle in order to include the interior of the vehicle as a detection range and the coordinates of the moving object that has been specified on the basis of the information that has been detected by the plurality of motion sensors.

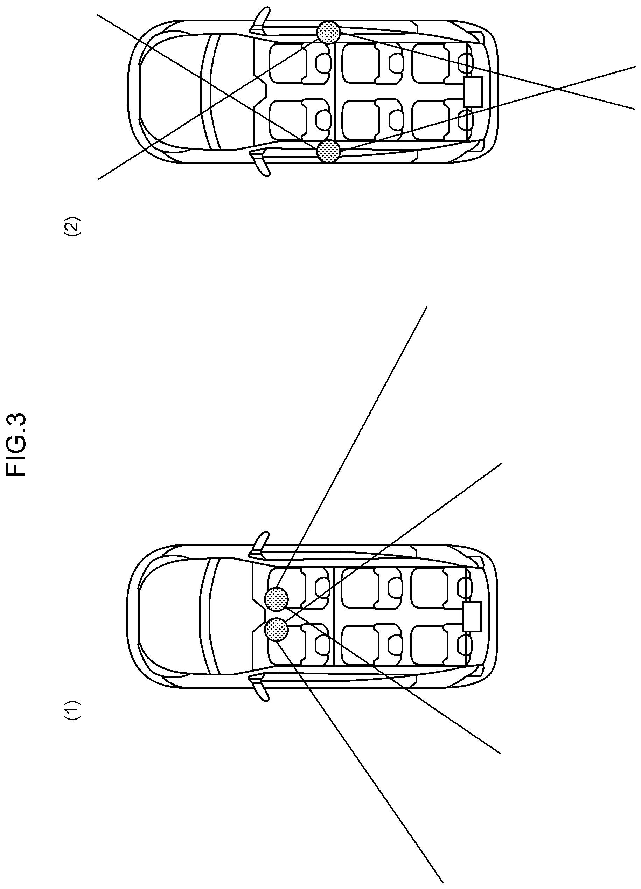

Moreover, the installation location of each of the motion sensors is not limited as long as the installation location is in the interior of the vehicle. For example, as indicated by (1) illustrated in FIG. 3, there may be a case in which the motion sensor is installed in the vicinity of a rearview mirror, or, as indicated by (2) illustrated in FIG. 3, there may be a case in which the motion sensor is installed at a center pillar. In other words, the motion sensor is installed in a region, such as a front pillar, a center pillar, a rear pillar, a rearview mirror, ceiling, a seat, or a rear window, in the interior of a vehicle in accordance with a purpose.

The determination unit 122 determines that the moving object is an object that is not to be detected in a case where the standard deviation of the intensity of the signal that has been acquired by the acquisition unit 121 is less than a threshold, and also, in a case where the standard deviation of the movement distance is less than a threshold. Here, the movement distance (amount of movement) may be a movement distance of the coordinates of the moving object that has been acquired by the acquisition unit 121, or may be a movement distance of the center of gravity that is a halfway point of the coordinates of the consecutive moving object. Furthermore, the standard deviation may be calculated by using samples that are present starting from a certain sample up to a sample in a predetermined time period (for example, 2.0 seconds) as the targets, or may be calculated by using samples that are present starting from a certain sample up to a predetermined number of samples (for example, 40 samples) as the targets. A specific example of the process performed by the determination unit 122 will be described later in a determination process.

In other words, the determination unit 122 determines that the moving object is an object that is not to be detected in a case where the standard deviation of the intensity of the signal that has been acquired by the acquisition unit 121 is less than the threshold in a time period that is equal to or greater than the predetermined percentage of a predetermined time period, and also, in a case where the standard deviation of the movement distance is less than the threshold in a time period that is equal to or greater than the predetermined percentage of the predetermined time period.

More specifically, the determination unit 122 determines that the moving object is an object that is not to be detected in a case where the standard deviation of the intensity of the signal that has been acquired by the acquisition unit 121 is less than a threshold (1.3) in a time period of 3.5 seconds that is equal to or greater than 90% of the time period, and also, in a case where the standard deviation of the movement distance is less than a threshold (4.0) in the time period of 3.5 seconds that is equal to or greater than 90% of the time period.

Moreover, the condition of the above described temporal element may be represented by the number of pieces of data. For example, in a case where 20 pieces of data are acquired in one second, the above described 3.5 seconds are represented by 70 pieces of data. In other words, the determination unit 122 determines that the moving object is an object that is not to be detected in a case where the standard deviation of the intensity of the signal that has been acquired by the acquisition unit 121 is less than the threshold (1.3) represented by 63 or more pieces of data, and also, the standard deviation of the movement distance is less than the threshold (4.0) represented by 63 pieces or more pieces of data.

Furthermore, the determination unit 122 is able to further add the condition of the distance between the moving object and the motion sensor, and is able to determine that the moving object is an object that is not to be detected. For example, the determination unit 122 determines that the moving object is an object that is not to be detected in a case where the standard deviation of the intensity of the signal that has been acquired by the acquisition unit 121 is less than the threshold, in a case where the standard deviation of the movement distance is less than the threshold, and also, in a case where the distance between the moving object and the motion sensor is less than the threshold.

More specifically, the determination unit 122 determines that the moving object is an object that is not to be detected in a case where the standard deviation of the intensity of the signal that has been acquired by the acquisition unit 121 is less than the threshold (1.3), in a case where the standard deviation of the movement distance is less than the threshold (4.0), and also, in a case where the distance between the moving object and the motion sensor is less than 300 cm. Here, the condition of the distance between the moving object and the motion sensor may be represented by a distance between the moving object and the motion sensor indicated on each of the X-axis and the Y-axis. For example, when the coordinates of the motion sensor are set to zero on the X-axis and zero on the Y-axis, the condition of the distance between the moving object and the motion sensor is represented by information indicating that "in a case where the moving object has been detected within a coordinate range of -300 to 300 cm on the X-axis and 0 to 500 cm on the Y-axis", or the like.

The changing unit 123 changes the setting of the motion sensor in a case where it is determined by the determination unit 122 that the moving object is an object that is not to be detected. For example, in a case where it is determined by the determination unit 122 that the moving object is an object that is not to be detected, the changing unit 123 changes the sensitivity to receive the signal received by the motion sensor. For example, in a case where it is determined by the determination unit 122 that the moving object is an object that is not to be detected, the changing unit 123 decreases the sensitivity to receive the signal that has been reflected in the vicinity of the coordinates of the moving object. Furthermore, for example, in a case where it is determined by the determination unit 122 that the moving object is an object that is not to be detected, the changing unit 123 decreases the sensitivity to receive the signal from a direction of the coordinates of the moving object.

[3. Determination process]

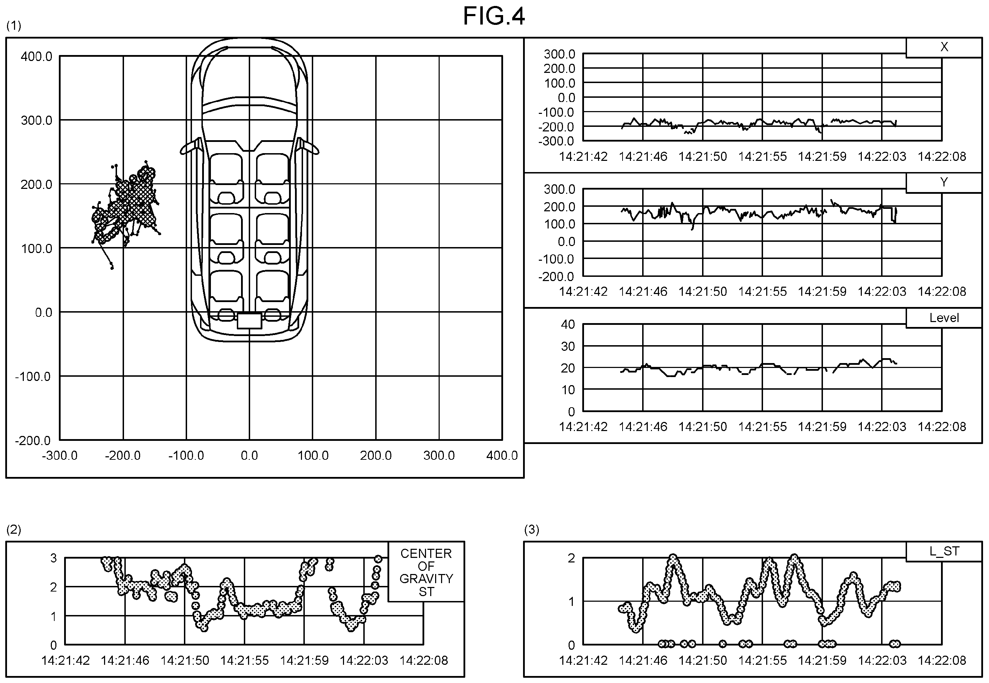

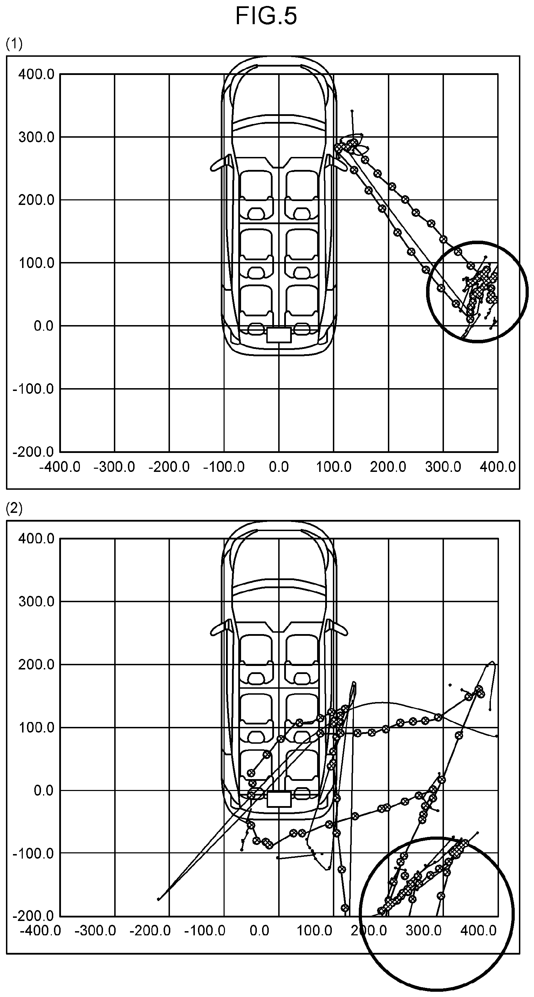

In the following, a determination process performed by the monitoring device 100 will be described with reference to FIG. 4 and FIG. 5. FIG. 4 and FIG. 5 are diagrams each illustrating one example of the determination process performed by the monitoring device 100. The part indicated by (1) illustrated in FIG. 4 is data that has been specified on the basis of the information that has been detected by the motion sensor in a situation in which a tree is swaying. For example, the information on the coordinates (X, Y) of the moving object, the information on the intensity (Level) of the signal, and the like are illustrated. Here, in a case where an object that is not to be detected and that is indicated by the swaying of a tree as one example has been detected by the motion sensor, the following characteristic movement of the coordinates and intensity of the signal are observed.

For example, in a case where the motion sensor detects a movement of the swaying of a tree, the coordinates of the moving object minutely shift due to a fine movement of branches and leaves. In other words, as indicated by (2) illustrated in FIG. 4, the standard deviation of the amount of movement is a low value. Furthermore, for example, in a case where the motion sensor detects the movement of the swaying of a tree, plants and the like do not spontaneously move and positions of the plants and the like rarely change, so that a change in intensity of the signal is small. In other words, as indicated by (3) illustrated in FIG. 4, the standard deviation of the intensity of the signal is a low value.

For this reason, the determination unit 122 performs determination of an object that is not to be detected on the basis of the characteristic movement of the coordinates and the characteristic change in the intensity of the signal observed in a case where the object that is not to be detected has been detected by the motion sensor. For example, as indicated by (2) illustrated in FIG. 4, the determination unit 122 determines that the moving object is an object that is not to be detected, in a case where the standard deviation of the movement distance that has been acquired by the acquisition unit 121 is less than the threshold (4.0) in the time period of 3.5 seconds that is equal to or greater than 90% of the time period, and also, as indicated by (3) illustrated in FIG. 4, in a case where the standard deviation of the intensity of the signal is less than the threshold (1.3) in the time period of 3.5 seconds that is equal to or greater than 90% of the time period.

As a result of this, the monitoring device 100 is able to determine that the moving object is an object that is not to be detected on the basis of the characteristic intensity of the signal and the characteristic movement of the coordinates of the moving object observed in a case where an object that is not to be detected has been detected as a moving object.

In the following, an addition of the condition of the distance performed by the determination unit 122 will be described. Each of the parts indicated by (1) and (2) illustrated in FIG. 5 indicates the coordinates of the moving object (person) that has been detected at a location that is far away from the vehicle. In this way, in a case where a moving object is detected at the location that is far away from the vehicle, fluctuations, noise, and attenuation occur in the coordinates of the moving object to be specified and the intensity of the signal. For example, as indicated by (1) illustrated in FIG. 5, in a case where a moving object is detected at a location that is far away from the vehicle on the X-axis, a minute shift in the coordinates of the moving object within a certain range and the intensity of the signal with low fluctuation are obtained. In this respect, as indicated by (2) illustrated in FIG. 5, the same applies to a case in which a moving object is detected at a location that is far away from the vehicle on the Y-axis.

In other words, also regarding the moving object that is detected at a distant location, in a case where determination is performed by using only the standard deviation of the coordinates of the moving object and the intensity of the signal as described above with reference to FIG. 4, in some cases, erroneous determination (erroneous detection) may occur. Accordingly, the determination unit 122 further adds the condition of the distance between the moving object and the motion sensor, and determines that the moving object is an object that is not to be detected.

For example, the determination unit 122 determines that the moving object is an object that is not to be detected, in a case where the standard deviation of the intensity of the signal that has been acquired by the acquisition unit 121 is less than the threshold (1.3) in the time period of 3.5 seconds that is equal to or greater than 90% of the time period, in a case where the standard deviation of the movement distance is less than the threshold (4.0) in the time period of 3.5 seconds that is equal to or greater than 90% of the time period, in a case where the distance between the moving object and the motion sensor on the X coordinate is within 300 cm, and also, in a case where the distance between the moving object and the motion sensor on the Y coordinate is within 500 cm. Furthermore, the determination unit 122 is able to use, in addition to the condition of the distance, a condition that the intensity of the signal is higher than zero, a condition that the moving object does not enter the interior of a vehicle, and the like in combination as appropriate.

As a result of this, the monitoring device 100 is able to exclude the moving object that has been detected at a distant location, and is able to prevent erroneous determination. Moreover, the above described distance with the moving object on the X coordinate and the Y coordinate is an example of a value that is indicated by an experiment conducted by using a minivan constituted of about 4600 mm in length and 1700 mm in width as a target vehicle, and, in a case where the technology described in this application is used, it is preferable that the distance is appropriately changed in accordance with a type of a vehicle, a size of the vehicle, a situation, and the like.

[4. Changing process]

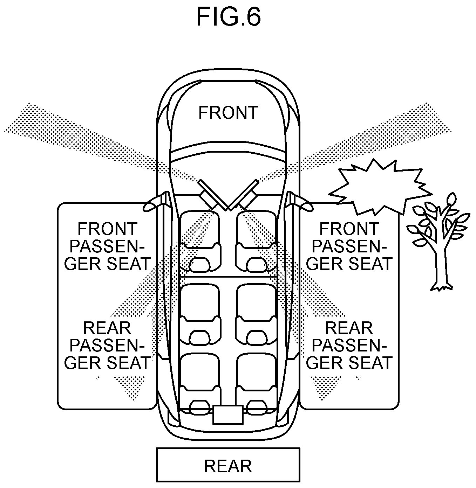

In the following, a changing process that is performed by the monitoring device 100 will be described with reference to FIG. 6. FIG. 6 is a diagram for explaining one example of the changing process performed by the monitoring device 100. In the example illustrated in FIG. 6, a tree is located in the vicinity of the front passenger seat disposed on the right side of the vehicle. In a case where this tree sways due to, for example, wind, the determination unit 122 determines that the moving object is an object that is not to be detected on the basis of the above described determination process.

After that, the changing unit 123 changes the setting of the motion sensor. For example, in a case where it is determined by the determination unit 122 that the moving object (tree) that is located in the vicinity of the front passenger seat disposed on the right side of the vehicle is an object that is not to be detected, the changing unit 123 decreases the sensitivity to receive the signal that has been reflected in the vicinity of the coordinates (X-axis: ∞, Y-axis: ∞) of the moving object (tree). At this time, the changing unit 123 need not change the sensitivity to receive the signal that has been reflected from a site other than the vicinity of the coordinates of the moving object (tree).

Furthermore, the changing unit 123 is able to decrease the sensitivity to receive the signal transmitted from the direction in which the moving object that has been determined to be an object that is not to be detected is located. For example, the changing unit 123 decreases the sensitivity to receive the signal transmitted from an angle (∘∘∘° to ∘∘∘°) at which the moving object that has been determined to be an object that is not to be detected is located.

In other words, the monitoring device 100 is able to determine the object that is not to be detected with high accuracy by preventing the signal transmitted from the moving object that does not need to be monitored from being received by decreasing the sensitivity to receive the signal transmitted from the moving object that has been determined to be an object that is not to be detected, and continuously performing the determination process by receiving the signal transmitted from the other locations and directions without turning off a power supply of the motion sensor.

[5. Flowchart]

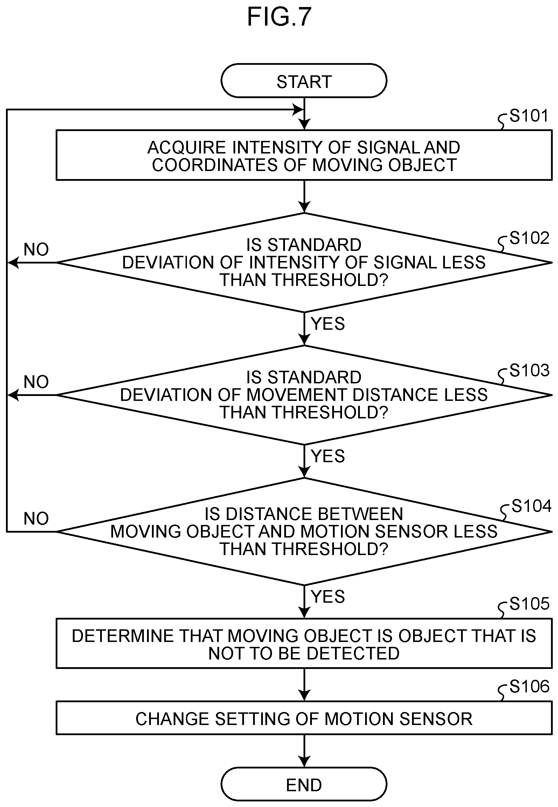

In the following, the process performed by the monitoring device 100 having the above described configuration will be described by using the flowchart illustrated in FIG. 7. The process indicated by the flowchart illustrated in FIG. 7 is mainly performed by the control unit 120. Furthermore, by constituting the process indicated by the flowchart as a program executed by a CPU included in the control unit 120, the process is able to function as a monitoring program. Moreover, the process performed at each of the steps described below may also be performed in different order, and, there may be a process that is omitted.

First, the acquisition unit 121 acquires the intensity of the signal that has been received by the motion sensor provided in the interior of the vehicle and the coordinates of the moving object that has been specified on the basis of the information that has been detected by the motion sensor (Step S101). For example, the acquisition unit 121 acquires the intensity of the signal that has been received by the motion sensor provided in the interior of the vehicle and the coordinates of the moving object that has been specified from the information that is related to both of the distance and the angle and that has been detected by the motion sensor.

Subsequently, the determination unit 122 determines whether the standard deviation of the intensity of the signal that has been acquired by the acquisition unit 121 is less than the threshold (Step S102). Here, if it is determined by the determination unit 122 that the standard deviation of the intensity of the signal is not less than the threshold ("No" at Step S102), the process again returns to Step S101.

On the other hand, if it is determined, by the determination unit 122, that the standard deviation of the intensity of the signal is less than the threshold ("Yes" at Step S102), the determination unit 122 determines whether the standard deviation of the movement distance that has been calculated from the coordinates of the moving object acquired by the acquisition unit 121 is less than the threshold (Step S103). Here, if it is determined by the determination unit 122 that the standard deviation of the movement distance is not less than the threshold ("No" at Step S103), the process again returns to Step S101.

On the other hand, if it is determined by the determination unit 122 that the standard deviation of the movement distance is less than the threshold ("Yes" at Step S103), the determination unit 122 determines whether the distance between the moving object and the motion sensor is less than the predetermined threshold (Step S104). For example, the determination unit 122 determines whether the distance between the moving object and the motion sensor calculated from both of the coordinates of the moving object and the coordinates of the motion sensor is less than the threshold. Here, if it is determined by the determination unit 122 that the distance between the moving object and the motion sensor is not less than the threshold ("No" at Step S104), the process again returns to Step S101.

On the other hand, if it is determined by the determination unit 122 that the distance between the moving object and the motion sensor is less than the threshold ("Yes" at Step S104), the determination unit 122 determines that the moving object is an object that is not to be detected (Step S105). Subsequently, the changing unit 123 changes the setting of the motion sensor (Step S106). For example, the changing unit 123 decreases the reception sensitivity with respect to the signal transmitted from a direction of the coordinates of the moving object that has been determined to be an object that is not to be detected.

[6. Effects]

The monitoring device 100 according to the embodiment includes the acquisition unit 121 that acquires both of the intensity of the signal that has been received by the motion sensor provided in the interior of the vehicle and the coordinates of the moving object that has been specified on the basis of the information that has been detected by the motion sensor, and the determination unit 122 that determines that the moving object is an object that is not to be detected, in a case where the standard deviation of the intensity of the signal that has been acquired by the acquisition unit 121 is less than the threshold, and also, in a case where the standard deviation of the movement distance is less than the threshold.

As a result of this, the monitoring device 100 is able to determine the object that is not to be detected with high accuracy by determining whether each of the standard deviation of the intensity of the signal and the standard deviation of the movement distance of the moving object falls below the threshold. In other words, the monitoring device 100 determines that the moving object is an object that is not to be detected on the basis of the intensity of the signal and the movement of the moving object on the coordinates that are characteristically observed in a case where the object that is not to be detected has been detected as the moving object.

The determination unit 122 included in the monitoring device 100 according to the embodiment further determines that the moving object is an object that is not to be detected in a case where the distance between the moving object and the motion sensor is less than the threshold. As a result of this, the monitoring device 100 is able to determine the object that is not to be detected with high accuracy by determining whether each of the standard deviation of the intensity of the signal and the standard deviation of the movement distance of the moving object falls below the threshold, and also, determining whether the distance between the moving object and the motion sensor falls below the threshold.

The monitoring device 100 according to the embodiment further includes the changing unit 123 that changes the setting of the motion sensor in a case where it is determined by the determination unit 122 that the moving object is an object that is not to be detected. As a result of this, the monitoring device 100 is able to determine the object that is not to be detected with high accuracy by preventing the signal transmitted from the moving object that does not need to be monitored from being received by decreasing the reception sensitivity to receive the signal transmitted from the moving object that has been determined to be an object that is not to be detected, and continuously performing the determination process by receiving the signal transmitted from the other locations and directions without turning off a power supply of the motion sensor.

[Second Embodiment]

[1. Configuration of monitoring device]

In the first embodiment, an example in which it is determined whether or not the moving object is an object that is not to be detected by using the information on both of the intensity of the signal and the coordinates of the moving object has been described, but, in a second embodiment that will be described below, an example in which it is determined whether or not the moving object is an object that is not to be detected on the basis of the coordinates of the moving object will be described. Moreover, descriptions of the same content as those described in the first embodiment will be omitted as appropriate.

First, the monitoring device 100 according to the embodiment will be described with reference to FIG. 2. FIG. 2 is a diagram illustrating an example of the configuration of the monitoring device 100 according to the embodiment. As illustrated in FIG. 2, the control unit 120 included in the monitoring device 100 includes the acquisition unit 121, the determination unit 122, and the changing unit 123. In the following, each of the units included in the control unit 120 will be described.

The acquisition unit 121 acquires the coordinates of the moving object that has been specified on the basis of the information that has been detected by the motion sensor provided in the interior of a vehicle. For example, the acquisition unit 121 acquires the coordinates of the moving object that has been specified from the information on both of the distance and the angle detected by the motion sensor.

The determination unit 122 determines whether or not the moving object is an object that is not to be detected on the basis of the coordinates of the moving object that has been acquired by the acquisition unit 121. For example, the determination unit 122 determines that the moving object is an object that is not to be detected, in a case where a value obtained by dividing the sum total of an amount of movement of the coordinates of the moving object acquired by the acquisition unit 121 in a predetermined time period by an amount of movement between a starting point and an end point at the coordinates of the moving object in the predetermined time period is equal to or greater than a threshold. At this time, the determination unit 122 is able to perform threshold determination by calculating each of the X coordinate and the Y coordinate. More specifically, the determination unit 122 determines that the moving object is an object that is not to be detected in a case where the value calculated by using Equation 1 is equal to or greater than a threshold (15), and also, in a case where a value calculated by using Equation 2 is equal to or greater than the threshold (15).

$$\sum_{k=2}^{n}(X_k - X_{k-1})/(X_n - X_1) \quad \cdots (1)$$

$$\sum_{k=2}^{n}(Y_k - Y_{k-1})/(Y_n - Y_1) \quad \cdots (2)$$

In addition, the determination unit 122 is able to perform the threshold determination with respect to the number of pieces of data exceeding the threshold. For example, when the total number of pieces of data is 100, the determination unit 122 determines that the moving object is an object that is not to be detected in a case where the number of pieces of data, in which the value calculated by using Equation 1 is equal to or greater than the threshold (15), is equal to or greater than a threshold (20), and also, in a case where the number of pieces of data, in which the value calculated by using Equation 2 is equal to or greater than the threshold (15), is equal to or greater than the threshold (20). Moreover, it is possible to use an arbitrary value for each of the thresholds in accordance with a purpose.

Furthermore, the determination unit 122 determines that the moving object is an object that is not to be detected in a case where a value obtained by dividing the sum total of an amount of movement of the coordinates of the moving object acquired by the acquisition unit 121 in a predetermined time period by the square root of the sum of the square of the difference between the maximum value and the minimum value of the coordinates of the moving object on the X coordinate in the predetermined time period and the square of the difference between the maximum value and the minimum value of the coordinates of the moving object on the Y coordinate in the predetermined time period is equal to or greater than the threshold. More specifically, the determination unit 122 determines that the moving object is an object that is not to be detected in a case where the value calculated by using Equation 3 is equal to or greater than the threshold (15).

$$\sum_{k=2}^{n} \sqrt{(X_k - X_{k-1})^2 + (Y_k - Y_{k-1})^2)} / \sqrt{(X_{max} - X_{min})^2 + (Y_{max} - Y_{min})^2} \quad \cdots (3)$$

Furthermore, the determination unit 122 performs frequency analysis related to the coordinates of the moving object acquired by the acquisition unit 121, and determines that the moving object is an object that is not to be detected in a case where a high-frequency component is included. For example, the determination unit 122 performs the frequency analysis on the basis of the Fourier transformation related to the coordinates of the moving object acquired by the acquisition unit 121, and determines that the moving object is an object that is not to be detected in a case where a high-frequency component with a value equal to or greater than a threshold (2 Hz) is included. Moreover, it is possible to use an arbitrary value for each of the thresholds in accordance with a purpose.

Furthermore, the determination unit 122 is able to determine that the moving object is an object that is not to be detected by adding a condition of the distance between the moving object and the motion sensor. For example, the determination unit 122 further determines that the moving object is an object that is not to be detected in a case where the distance between the moving object and the motion sensor is less than the threshold.

More specifically, the determination unit 122 further determines that the moving object is an object that is not to be detected in a case where the distance between the moving object and the motion sensor is less than 300 cm. Here, the condition of the distance between the moving object and the motion sensor may be represented by the distance between the moving object and the motion sensor indicated on each of the X-axis and the Y-axis. For example, when the coordinates of the motion sensor are set to zero on the X-axis, and zero on the Y-axis, the condition of the distance between the moving object and the motion sensor is represented by information indicating that "in a case where the moving object has been detected within a coordinate range of -300 to 300 cm on the X-axis and 0 to 500 cm on the Y-axis", or the like.

In a case where it is determined, by the determination unit 122, that the moving object is an object that is not to be detected, the changing unit 123 changes the setting of the motion sensor. For example, in a case where it is determined by the determination unit 122 that the moving object is an object that is not to be detected, the changing unit 123 changes the sensitivity to receive the signal received by the motion sensor. For example, in a case where it is determined by the determination unit 122 that the moving object is an object that is not to be detected, the changing unit 123 decreases the sensitivity to receive the signal transmitted from the vicinity of the coordinates of the moving object. For example, in a case where it is determined by the determination unit 122 that the moving object is an object that is not to be detected, the changing unit 123 decreases the sensitivity to receive the signal from a direction of the coordinates of the moving object.

[2. Determination process]

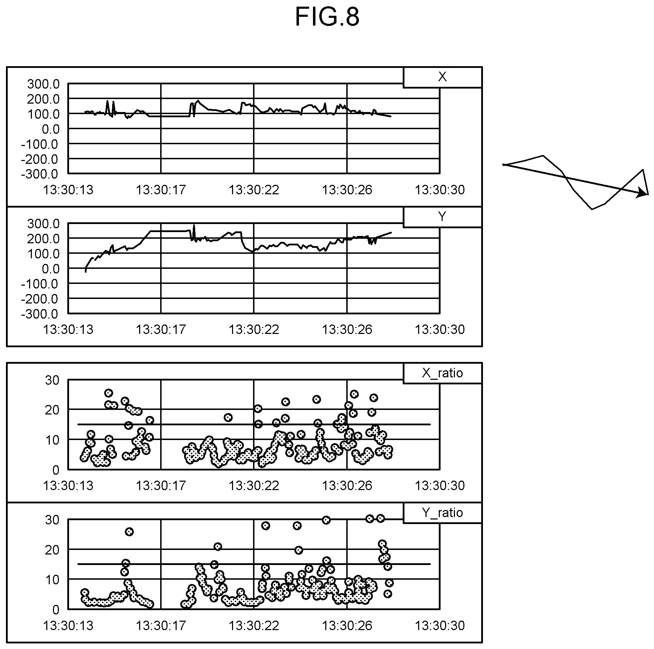

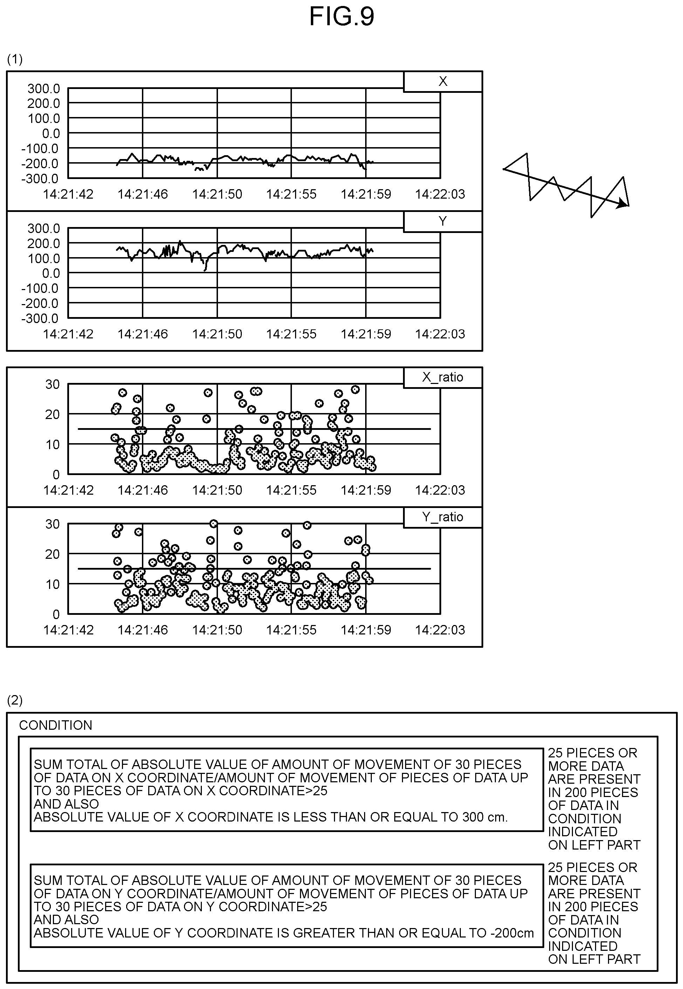

In the following, the determination process performed by the monitoring device 100 will be described with reference to FIGS. 8 to 11. FIGS. 8 to 11 are diagrams each illustrating one example of the determination process performed by the monitoring device 100. First, an example of a process of determining an object that is not to be detected by using the sum total of the amount of movement of each of the points with respect to the amount of movement between the starting point and the end point will be described with reference to FIG. 8 and FIG. 9.

A difference between a case in which a person has been detected and a case in which an object that is not to be detected has been detected will be described with reference to FIG. 8 and FIG. 9. The items illustrated on the left side in FIG. 8 is the X coordinate, the Y coordinate, a Ratio value of the X coordinate, and a Ratio value of the Y coordinate indicated when the motion sensor detects a moving object (person). The Ratio value is a ratio of the total amount of movement in a predetermined time period to the amount of movement between the starting point and the end point in the predetermined time period. Furthermore, the item illustrated on the right side in FIG. 8 is a diagram illustrating the amount of movement between the starting point and the end point by using an arrow and illustrating each of the amounts of movements by using a line.

In a case where the motion sensor detects the moving object (person), as illustrated on the left side of FIG. 8, the number of pieces of data exceeding the threshold (15) with respect to the Ratio value on the X coordinate is small. Similarly, the number of pieces of data exceeding the threshold (15) with respect to the Ratio value on the Y coordinate is small. Furthermore, it is possible to visually recognize that, in a case where the motion sensor detects the moving object (person), the sum total of the amount of movement of each of the points with respect to the amount of movement between the starting point and the end point is small from the right side of FIG. 8.

The items illustrated on the left side of the drawing indicated by (1) illustrated in FIG. 9 is the X coordinate, the Y coordinate, a Ratio value of the X coordinate, and a Ratio value of the Y coordinate indicated when the motion sensor detects a moving object (swaying of a tree). Furthermore, the item illustrated on the right side of the drawing indicated by (1) illustrated in FIG. 9 is a diagram illustrating the amount of movement between the starting point and the end point by using an arrow and illustrating the amount of movement of each of the points by using a line. In a case where the motion sensor detects the moving object (swaying of a tree), as illustrated on the left side of the drawing indicated by (1) illustrated in FIG. 9, the number of pieces of data exceeding the threshold (15) with respect to the Ratio value on the X coordinate is large, and similarly, the number of pieces of data exceeding the threshold (15) with respect to the Ratio value on the Y coordinate is also large. Furthermore, it is possible to visually recognize that, in a case where the motion sensor detects the moving object (person), the sum total of the amount of movement of each of the points with respect to the amount of movement between the starting point and the end point is large from the right side of the drawing indicated by (1) illustrated in FIG. 9.

In other words, in a case where a person is detected as a moving object, the person rarely stays at a fixed position and moves around a lot, so that the sum total of the amount of movement of each of the points with respect to the amount of movement between the starting point and the end point is small. In contrast, in a case where a swaying of a tree is detected as a moving object, branches move finely up, down, left and right, but move only within a predetermined range, so that, as compared with a case of a person, there is a characteristic that the sum total of the amount of movement of each of the points with respect to the amount of movement between the starting point and the end point is large.

Accordingly, the monitoring device 100 performs threshold determination on the sum total of the amount of movement of each of the points with respect to the amount of movement between the starting point and the end point. For example, as indicated by the condition indicated by (2) illustrated in FIG. 9, the determination unit 122 determines that the moving object is an object that is not to be detected, in a case where, when the total number of pieces of data is 200, the number of pieces of data, in which the value obtained by dividing the sum total of the amount of movement of each of the points of 30 samples on the X coordinate by the amount of movement between the starting point and the end point on the X coordinate is equal to or greater than a threshold (25), is equal to or greater than the threshold (25), and also, in a case where the number of pieces of data, in which the value obtained by dividing the sum total of the amount of movement of each of the points of 30 samples on the Y coordinate by the amount of movement between the starting point and the end point on the Y coordinate is equal to or greater than the threshold (25), is equal to or greater than the threshold (25). As a result of this, the monitoring device 100 is able to determine the object that is not to be detected with high accuracy by performing the threshold determination with respect to the value obtained by dividing the total amount of movement by the amount of movement between the starting point and the end point on the coordinates.

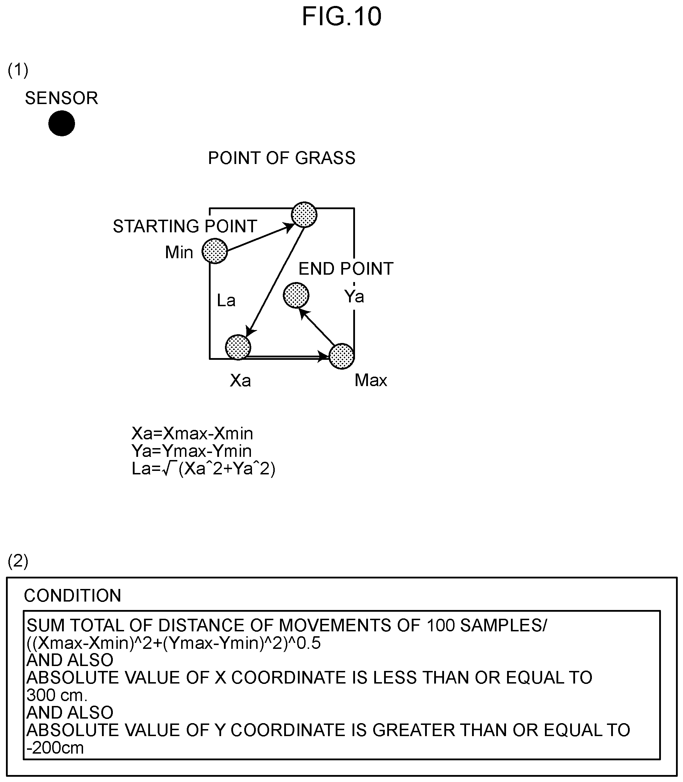

In the following, an example in which an object that is not to be detected is determined by using the sum total of the amount of movement in a predetermined position coordinates area will be described with reference to FIG. 10. The part indicated by (1) illustrated in FIG. 10 indicates a movement of the coordinates in a case where grass sways caused by the wind. For example, in a case where a plant is swaying caused by the wind, branches and leaves move at their fixed positions. In other words, the sum total of the amount of movement in the predetermined position coordinates area tends to increase. Here, the predetermined position coordinates area mentioned here is an area, as indicated by a diagonal line (La) of a rectangle indicated in (1) illustrated in FIG. 9, that is determined by the maximum value and the minimum value indicated on the X coordinate and the maximum value and the minimum value indicated on the Y coordinate in a predetermined time period.

For example, La is represented by the square root of the sum of the square of the difference between the maximum value and the minimum value of the coordinates of the moving object on the X coordinate in the predetermined time period and the square of the difference between the maximum value and the minimum value of the coordinates of the moving object on the Y coordinate in the predetermined time period. Moreover, the predetermined time period may also be indicated by the number of pieces of data.

For example, the monitoring device 100 performs the threshold determination with respect to the amount of movement in the predetermined position coordinates area on the basis of the condition indicated by (2) illustrated in FIG. 10. For example, when the total number of pieces of data corresponds to 100 samples, the determination unit 122 determines that the moving object is an object that is not to be detected in a case where a value obtained by dividing the sum total of the distance of the movements of 100 samples by the square root of the sum of the square of the difference between the maximum value and the minimum value on the X coordinate and the square of the difference between the maximum value and the minimum value of the coordinates of the moving object on the Y coordinate in the predetermined time period is equal to or greater than the predetermined threshold.

As a result of this, the monitoring device 100 is able to determine the object that is not to be detected with high accuracy by evaluating the movement distance between each of the points without distinguishing between the X coordinate and the Y coordinate by performing the threshold determination with respect to the value obtained by dividing the total amount of movement by the square root of the sum of the square of the difference between the maximum value and the minimum value for each axis of the coordinates.

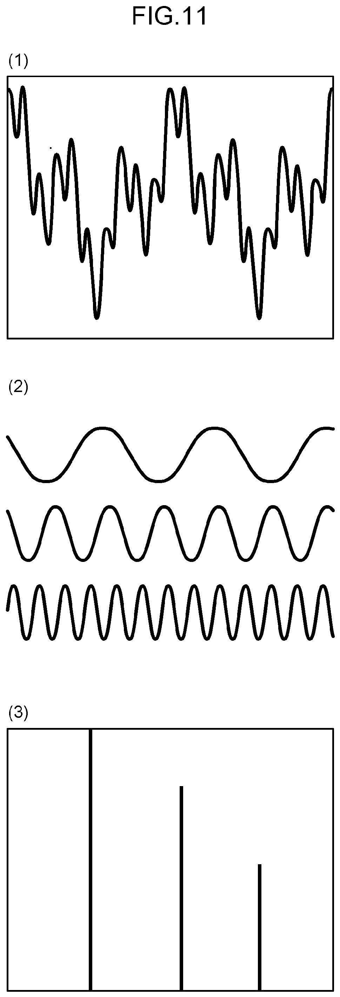

In the following, an example of a process of determining an object that is not to be detected on the basis of the frequency analysis will be described with reference to FIG. 11. The part indicated by (1) illustrated in FIG. 11 indicates a movement of the moving object on the coordinates detected by swaying of a tree. As indicated by (2) and (3) illustrated in FIG. 11, a plurality of frequencies are included in the movements of the moving object on the coordinates detected by the swaying of the tree indicated by (1) illustrated in FIG. 11. In other words, a tree that sways as a result of receiving the wind or the like performs repetitive movements at a fixed position, so that a high-frequency component, which is not observed in a case where a person passes by the vicinity of a vehicle or in a case where a person peeps into a vehicle, is included in the movements on the coordinates of the moving object that has been detected on the basis of the swaying of the tree.

As a result, the determination unit 122 performs frequency analysis with respect to the data on the coordinates of the moving object, and determines that the moving object is an object that is not to be detected in a case where a high-frequency component with a value equal to or greater than a threshold is included. For example, the determination unit 122 performs the frequency analysis on the basis of the Fourier transformation related to the coordinates of the moving object that has been acquired by the acquisition unit 121, and estimates the moving object is an object that is not to be detected in a case where a high-frequency component with a value equal to or greater than the threshold (2 Hz) is included.

As a result of this, the monitoring device 100 is able to determine that the moving object is an object that performs repetitive movements at a fixed position and that is not to be detected by determining whether characteristic movements or properties are observed in the coordinates of the moving object that is an object that is not to be detected.

[3. Flowchart]

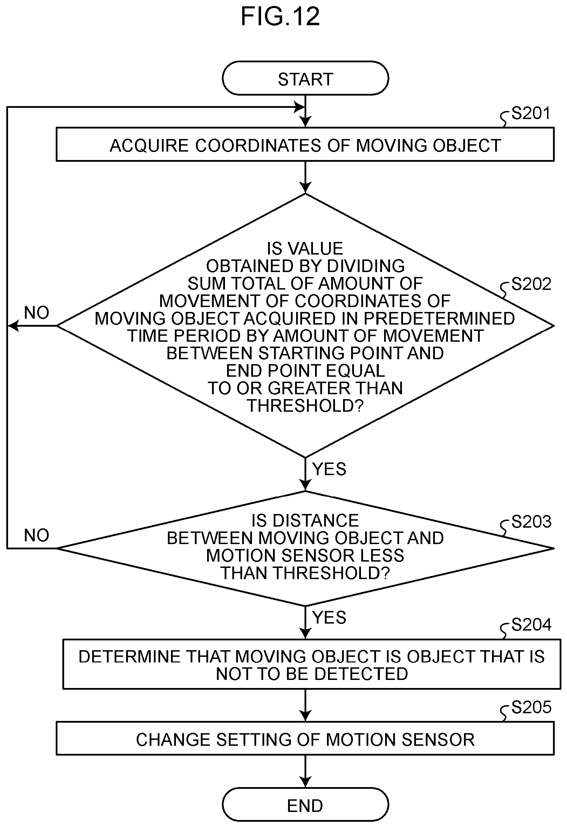

In the following, the process performed by the monitoring device 100 having the above described configuration will be described by using the flowcharts illustrated in FIGS. 12 to 14. The processes indicated by the flowcharts illustrated in FIGS. 12 to 14 are mainly performed by the control unit 120. Furthermore, by constituting each of the processes indicated by the respective flowcharts as a program executed by a CPU included in the control unit 120, the process is able to function as a monitoring program. Moreover, the process performed at each of the steps described below may also be performed in different order, and, there may be a process that is omitted.

First, the flow of the process in which the monitoring device 100 determines that the moving object is an object that is not to be detected by using a method of using the sum total of the amount of movement of each of the points with respect to the amount of movement between the starting point and the end point will be described with reference to FIG. 12. First, the acquisition unit 121 acquires the coordinates of the moving object that has been specified on the basis of the information that has been detected by the motion sensor provided in the interior of a vehicle (Step S201). For example, the acquisition unit 121 acquires the coordinates of the moving object that has been specified from the information on both of the distance and the angle that have been detected by the motion sensor.

Subsequently, the determination unit 122 determines whether a value obtained by dividing the sum total of an amount of movement of the coordinates of the moving object acquired by the acquisition unit 121 in a predetermined time period by an amount of movement between the starting point and the end point at the coordinates of the moving object in the predetermined time period is equal to or greater than the threshold (Step S202). For example, the determination unit 122 determines whether the value calculated by using Equation 1 is equal to or greater than the threshold, and also determines whether the value calculated by using Equation 2 is equal to or greater than the threshold. Here, in a case where it is determined by the determination unit 122 that the value is not equal to or greater than the threshold ("No" at Step S202), the process again returns to Step S201.

On the other hand, if it is determined by the determination unit 122 that the value is equal to or greater than the threshold ("Yes" at Step S202), the determination unit 122 determines whether or not the distance between the moving object and the motion sensor is less than the threshold (Step S203). Here, if it is determined by the determination unit 122 that the value is not less than the threshold ("No" at Step S203), the process again returns to Step S201.

On the other hand, if it is determined by the determination unit 122 that the value is less than the threshold ("Yes" at Step S203), the determination unit 122 determines that the moving object is an object that is not to be detected (Step S204). Subsequently, the changing unit 123 changes the setting of the motion sensor (Step S205). For example, the changing unit 123 decreases the reception sensitivity with respect to the signal transmitted from a direction of the coordinates of the moving object that has been determined to be an object that is not to be detected.

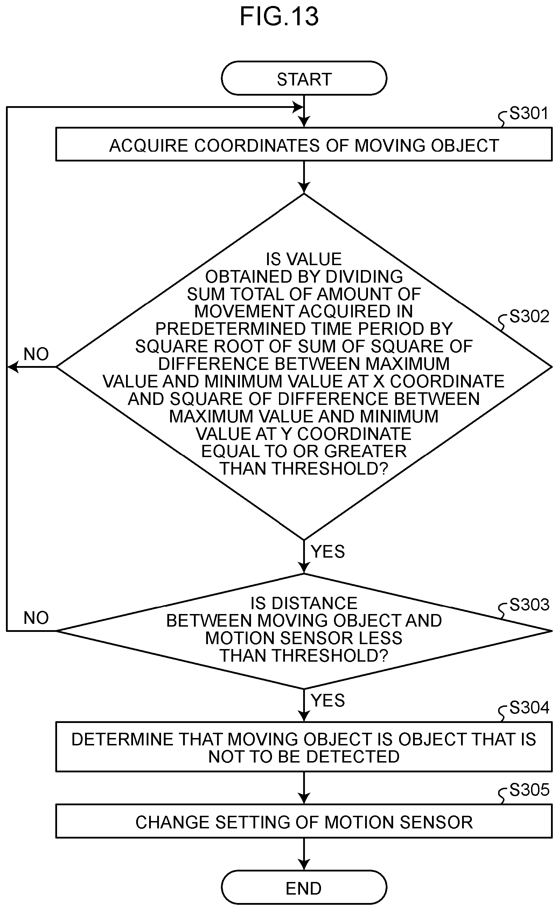

In the following, the flow of the process in which the monitoring device 100 determines that the moving object is an object that is not to be detected by using a method of using the sum total of the amount of movement in the predetermined position coordinates area will be described with reference to FIG. 13. First, the acquisition unit 121 acquires the coordinates of the moving object that has been specified on the basis of the information that has been detected by the motion sensor provided in the interior of a vehicle (Step S301). For example, the acquisition unit 121 acquires the coordinates of the moving object that has been specified from the information on both of the distance and the angle that have been detected by the motion sensor.

Subsequently, the determination unit 122 determines whether the value obtained by dividing the sum total of the amount of movement of the coordinates of the moving object that has been acquired by the acquisition unit 121 in the predetermined time period by the square root of the sum of the square of the difference between the maximum value and the minimum value of the coordinates of the moving object on the X coordinate in the predetermined time period and the square of the difference between the maximum value and the minimum value of the coordinates of the moving object on the Y coordinate in the predetermined time period is equal to or greater than the threshold (Step S302). For example, the determination unit 122 determines whether the value calculated by using Equation 3 is equal to or greater than the threshold. Here, if it is determined by the determination unit 122 that the value is not equal to or greater than the threshold ("No" at Step S302), the process again returns to Step S301.

On the other hand, if it is determined by the determination unit 122 that the value is equal to or greater than the threshold ("Yes" at Step S302), the determination unit 122 determines whether or not the distance between the moving object and the motion sensor is less than the threshold (Step S303). Here, if it is determined by the determination unit 122 that the value is not less than the threshold ("No" at Step S303), the process again returns to Step S301.

On the other hand, if it is determined by the determination unit 122 that the value is less than the threshold ("Yes" at Step S303), the determination unit 122 determines that the moving object is an object that is not to be detected (Step S304). Subsequently, the changing unit 123 changes the setting of the motion sensor (Step S305). For example, the changing unit 123 decreases the reception sensitivity with respect to the signal transmitted from a direction of the coordinates of the moving object that has been determined to be an object that is not to be detected.

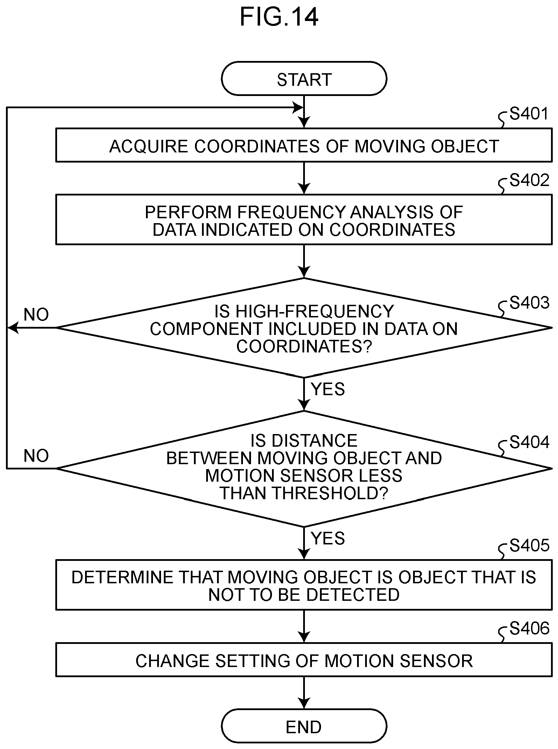

In the following, the flow of the process in which the monitoring device 100 determines that the moving object is an object that is not to be detected by performing a frequency analysis will be described with reference to FIG. 14. First, the acquisition unit 121 acquires the coordinates of the moving object that has been specified on the basis of the information detected by the motion sensor provided in the interior of a vehicle (Step S401). For example, the acquisition unit 121 acquires the coordinates of the moving object that has been specified from the information on both of the distance and the angle that are detected by the motion sensor.

Subsequently, the determination unit 122 performs the frequency analysis of the data on the coordinates of the moving object (Step S402). For example, the determination unit 122 performs the frequency analysis on the basis of the Fourier transformation related to the data on the coordinates of the moving object. Subsequently, the determination unit 122 determines whether a high-frequency component included in the data on the coordinates of the moving object (Step S403). For example, the determination unit 122 determines whether a high frequency equal to or greater than a predetermined threshold is included in the data on the coordinates of the moving object that has been subjected to the frequency analysis. Here, if it is determined by the determination unit 122 that the high frequency is not equal to or greater than the threshold ("No" at Step S403), the process again returns to Step S401.

On the other hand, if it is determined by the determination unit 122 that the high-frequency component is included ("Yes" at Step S403), the determination unit 122 determines whether the distance between the moving object and the motion sensor is less than the threshold (Step S404). Here, if it is determined by the determination unit 122 that the distance is not less than the threshold ("No" at Step S404), the process again returns to Step S401.

On the other hand, if it is determined by the determination unit 122 that the distance is less than the threshold ("Yes" at Step S404), the determination unit 122 determines that the moving object is an object that is not to be detected (Step S405). Subsequently, the changing unit 123 changes the setting of the motion sensor (Step S406). For example, the changing unit 123 decreases the reception sensitivity with respect to the signal transmitted from a direction of the coordinates of the moving object that has been determined to be an object that is not to be detected.

[4. Effects]

The monitoring device 100 according to the embodiment includes the acquisition unit 121 that acquires the coordinates of the moving object that has been specified on the basis of the information that has been detected by the motion sensor provided in the interior of a vehicle, and the determination unit 122 that determines whether or not the moving object is an object that is not to be detected on the basis of the coordinates of the moving object that has been acquired by the acquisition unit 121.

As a result of this, the monitoring device 100 is able to determine the moving object is an object that is not to be detected on the basis of the coordinates of the moving object. In other words, the monitoring device 100 is able to determine the moving object that performs repetitive movements at a fixed position and that is an object that is not to be detected by determining whether characteristic movements or properties are observed in the coordinates of the moving object.

The determination unit 122 included in the monitoring device 100 according to the embodiment determines that the moving object is an object that is not to be detected in a case where a value obtained by dividing the sum total of an amount of movement of the coordinates of the moving object acquired by the acquisition unit 121 in a predetermined time period by an amount of movement between the starting point and the end point at the coordinates of the moving object in the predetermined time period is equal to or greater than the threshold. As a result of this, the monitoring device 100 is able to determine the object that is not to be detected with high accuracy by performing the threshold determination with respect to the value obtained by dividing the total amount of movement by the amount of movement between the starting point and the end point on the coordinates.

The determination unit 122 included in the monitoring device 100 according to the embodiment determines that the moving object is an object that is not to be detected in a case where a value obtained by dividing the sum total of an amount of movement of the coordinates of the moving object acquired by the acquisition unit 121 in a predetermined time period by the square root of the sum of the square of the difference between the maximum value and the minimum value of the coordinates of the moving object on the X coordinate in the predetermined time period and the square of the difference between the maximum value and the minimum value of the coordinates of the moving object on the Y coordinate in the predetermined time period is equal to or greater than the threshold.

As a result of this, the monitoring device 100 is able to determine the object that is not to be detected with high accuracy by evaluating the movement distance between each of the points without distinguishing between the X coordinate and the Y coordinate by performing the threshold determination with respect to the value obtained by dividing the total amount of movement by the square root of the sum of the square of the difference between the maximum value and the minimum value for each axis of the coordinates.

The determination unit 122 included in the monitoring device 100 according to the embodiment performs frequency analysis related to the coordinates of the moving object acquired by the acquisition unit 121, and determines that the moving object is an object that is not to be detected in a case where a high-frequency component is included. As a result of this, the monitoring device 100 is able to determine the object that is not to be detected with high accuracy by determining whether a high frequency equal to or greater than a predetermined threshold is included in the data on the coordinates of the moving object that has been subjected to the frequency analysis.

The determination unit 122 included in the monitoring device 100 according to the embodiment further determines that the moving object is an object that is not to be detected in a case where the distance between the moving object and the motion sensor is less than the threshold. As a result of this, the monitoring device 100 is able to determine the object that is not to be detected with high accuracy by determining whether characteristic movements or properties are observed in the coordinates of the moving object, and also, by determining whether the distance between the moving object and the motion sensor falls below the threshold.

The monitoring device 100 according to the embodiment further includes the changing unit 123 that changes the setting of the motion sensor in a case where it is determined that that the moving object is an object that is not to be detected. As a result of this, the monitoring device 100 is able to determine the object that is not to be detected with high accuracy by preventing the signal transmitted from the moving object that does not need to be monitored from being received by decreasing the reception sensitivity to receive the signal transmitted from the moving object that has been determined to be an object that is not to be detected, and continuously performing the determination process by receiving the signal transmitted from the other locations and directions without turning off a power supply of the motion sensor.

[Others]

[1. Hardware configuration]

Furthermore, the monitoring device 100 according to the above described embodiment is implemented by, for example, a computer 1000 having a configuration illustrated in FIG. 11. FIG. 11 is a diagram of a hardware configuration indicating one example of a computer that implements the function of the monitoring device 100. The computer 1000 includes a CPU 1100, a RAM 1200, a ROM 1300, an HDD 1400, a communication interface (I/F) 1500, an input output interface (I/F) 1600, and a media interface (I/F) 1700.

The CPU 1100 operates on the basis of a program stored in the ROM 1300 or the HDD 1400, and controls each of the units. The ROM 1300 stores therein a boot program executed by the CPU 1100 at the time of activation of the computer 1000, a program depending on the hardware of the computer 1000, and the like.

The HDD 1400 stores therein a program executed by the CPU 1100, data that is used by the program, and the like. The communication interface 1500 receives data from the other devices via a predetermined communication network, sends the received data to the CPU 1100, and transmits the data generated by the CPU 1100 to the other devices via the predetermined communication network.

The CPU 1100 controls an output device, such as a display or a printer, and an input device, such as a keyboard or a mouse, via an input output interface 1600. The CPU 1100 acquires data from the input device via the input output interface 1600. Furthermore, the CPU 1100 outputs the generated data to the output device via the input output interface 1600.

The media interface 1700 reads a program or data stored in a recording medium 1800, and provides the read program or data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a digital versatile disk (DVD) or a phase change rewritable disk (PD), a magneto-optical recording medium, such as a magneto-optical disk (MO), a tape medium, a magnetic recording medium, or a semiconductor memory.

For example, in a case where the computer 1000 functions as the monitoring device 100 according to the embodiment, the CPU 1100 of the computer 1000 implements the functions of the control unit 120 by executing the programs loaded on the RAM 1200. The CPU 1100 of the computer 1000 reads and executes the programs from the recording medium 1800, but, as another example, the programs may be acquired from another device via the predetermined communication network.

[2. Others]

In the above, one example of the embodiment according to the present invention has been described, but the present invention is not limited to the above described embodiment. In other words, the present invention may be implemented in other forms in which various modifications and changes are made in accordance with the knowledge of persons skilled in the art without departing from the spirit of the present invention. Such modifications are of course included in the scope of the present invention as long as the monitoring device according to the present invention is included.

Reference Signs List

| | |
|---|---|
| 1 | monitoring system |
| 10 | in-vehicle device |
| 100 | monitoring device |
| 110 | communication unit |
| 120 | control unit |
| 121 | acquisition unit |
| 122 | determination unit |
| 123 | changing unit |
| 130 | storage unit |

**Claims**

1. A monitoring device comprising:

an acquisition unit that acquires an intensity of a signal that has been received by a motion sensor that is provided in an interior of a vehicle, and the coordinates of a moving object that has been specified based on information that has been detected by the motion sensor; and
a determination unit that determines that the moving object is an object that is not to be detected in a case where a standard deviation of the intensity of the signal acquired by the acquisition unit is less than a threshold, and also, in a case where a standard deviation of a movement distance is less than a threshold.

2. The monitoring device according to claim 1, wherein the determination unit further determines that the moving object is the object that is not to be detected in a case where a distance between the moving object and the motion sensor is less than a threshold.

3. The monitoring device according to claim 1, further comprising a changing unit that changes a setting of the motion sensor in a case it is determined by the determination unit that the moving object is the object that is not to be detected.

4. A monitoring method that causes a monitoring device to execute a process comprising:

an acquiring step of acquiring an intensity of a signal that has been received by a motion sensor provided in an interior of a vehicle and the coordinates of a moving object that has been specified based on information that has been detected by the motion sensor; and
a determining step of determining that the moving object is an object that is not to be detected in a case where a standard deviation of the intensity of the signal acquired at the acquiring step is less than a threshold, and also, in a case where a standard deviation of a movement distance is less than a threshold.

5. A monitoring program that causes a computer to execute a process comprising:

an acquiring step of acquiring an intensity of a signal that has been received by a motion sensor provided in an interior of a vehicle and the coordinates of a moving object that has been specified based on information that has been detected by the motion sensor; and
a determining step of determining that the moving object is an object that is not to be detected in a case where a standard deviation of the intensity of the signal acquired at the acquiring step is less than a threshold, and also, in a case where a standard deviation of a movement distance is less than a threshold.

# FIG.1

1

100

MONITORING
DEVICE

N

10   VEx

IN-VEHICLE
DEVICE

# FIG.2

MONITORING DEVICE — 100

COMMUNI-CATION UNIT — 110

CONTROL UNIT — 120

ACQUISITION UNIT — 121

DETERMINA-TION UNIT — 122

CHANGING UNIT — 123

STORAGE UNIT — 130

# FIG.3

(1)

(2)

EP 4 787 016 A1

# FIG.4

(1)

(2)

(3)

# FIG.5

(1)

(2)

## FIG.6

# FIG.7

```
┌─────────────┐
│    START    │
└──────┬──────┘
       │
       ▼                                                      S101
┌──────────────────────────────────────────────────────────┐
│           ACQUIRE INTENSITY OF SIGNAL AND                  │
│            COORDINATES OF MOVING OBJECT                    │
└──────────────────────────┬─────────────────────────────────┘
                           │
                           ▼                                 S102
        NO          IS STANDARD
       ◄─────  DEVIATION OF INTENSITY OF SIGNAL LESS
                      THAN THRESHOLD?
                           │ YES
                           ▼                                 S103
        NO          IS STANDARD
       ◄─────  DEVIATION OF MOVEMENT DISTANCE LESS
                      THAN THRESHOLD?
                           │ YES
                           ▼                                 S104
        NO        IS DISTANCE BETWEEN
       ◄─────  MOVING OBJECT AND MOTION SENSOR LESS
                      THAN THRESHOLD?
                           │ YES
                           ▼                                 S105
┌──────────────────────────────────────────────────────────┐
│    DETERMINE THAT MOVING OBJECT IS OBJECT THAT IS          │
│                 NOT TO BE DETECTED                         │
└──────────────────────────┬─────────────────────────────────┘
                           ▼                                 S106
┌──────────────────────────────────────────────────────────┐
│           CHANGE SETTING OF MOTION SENSOR                  │
└──────────────────────────┬─────────────────────────────────┘
                           ▼
                    ┌─────────────┐
                    │     END     │
                    └─────────────┘
```

# FIG.8

# FIG.9

(1)

(2)

| CONDITION | |
|---|---|
| SUM TOTAL OF ABSOLUTE VALUE OF AMOUNT OF MOVEMENT OF 30 PIECES OF DATA ON X COORDINATE/AMOUNT OF MOVEMENT OF PIECES OF DATA UP TO 30 PIECES OF DATA ON X COORDINATE>25<br>AND ALSO<br>ABSOLUTE VALUE OF X COORDINATE IS LESS THAN OR EQUAL TO 300 cm. | 25 PIECES OR MORE DATA ARE PRESENT IN 200 PIECES OF DATA IN CONDITION INDICATED ON LEFT PART |
| SUM TOTAL OF ABSOLUTE VALUE OF AMOUNT OF MOVEMENT OF 30 PIECES OF DATA ON Y COORDINATE/AMOUNT OF MOVEMENT OF PIECES OF DATA UP TO 30 PIECES OF DATA ON Y COORDINATE>25<br>AND ALSO<br>ABSOLUTE VALUE OF Y COORDINATE IS GREATER THAN OR EQUAL TO -200cm | 25 PIECES OR MORE DATA ARE PRESENT IN 200 PIECES OF DATA IN CONDITION INDICATED ON LEFT PART |

# FIG.10

(1)

SENSOR
●

POINT OF GRASS

STARTING POINT
Min

END POINT
Ya

La

Xa          Max

$$Xa=Xmax-Xmin$$
$$Ya=Ymax-Ymin$$
$$La=\sqrt{(Xa^2+Ya^2)}$$

(2)

CONDITION

SUM TOTAL OF DISTANCE OF MOVEMENTS OF 100 SAMPLES/
$((Xmax-Xmin)^2+(Ymax-Ymin)^2)^{0.5}$
AND ALSO
ABSOLUTE VALUE OF X COORDINATE IS LESS THAN OR EQUAL TO
300 cm.
AND ALSO
ABSOLUTE VALUE OF Y COORDINATE IS GREATER THAN OR EQUAL TO
-200cm

# FIG.11

(1)

(2)

(3)

# FIG.12

START

S201
ACQUIRE COORDINATES OF MOVING OBJECT

S202
IS VALUE OBTAINED BY DIVIDING SUM TOTAL OF AMOUNT OF MOVEMENT OF COORDINATES OF MOVING OBJECT ACQUIRED IN PREDETERMINED TIME PERIOD BY AMOUNT OF MOVEMENT BETWEEN STARTING POINT AND END POINT EQUAL TO OR GREATER THAN THRESHOLD?

NO

YES

S203
IS DISTANCE BETWEEN MOVING OBJECT AND MOTION SENSOR LESS THAN THRESHOLD?

NO

YES

S204
DETERMINE THAT MOVING OBJECT IS OBJECT THAT IS NOT TO BE DETECTED

S205
CHANGE SETTING OF MOTION SENSOR

END

# FIG.13

START

ACQUIRE COORDINATES OF MOVING OBJECT ⌇S301

IS VALUE
OBTAINED BY DIVIDING
SUM TOTAL OF AMOUNT OF
MOVEMENT ACQUIRED IN
PREDETERMINED TIME PERIOD BY
SQUARE ROOT OF SUM OF SQUARE OF
DIFFERENCE BETWEEN MAXIMUM
VALUE AND MINIMUM VALUE AT X COORDINATE
AND SQUARE OF DIFFERENCE BETWEEN
MAXIMUM VALUE AND MINIMUM
VALUE AT Y COORDINATE
EQUAL TO OR GREATER
THAN THRESHOLD? ⌇S302

NO

YES

IS DISTANCE
BETWEEN MOVING OBJECT AND
MOTION SENSOR LESS
THAN THRESHOLD? ⌇S303

NO

YES

DETERMINE THAT MOVING OBJECT IS OBJECT THAT IS NOT TO BE DETECTED ⌇S304

CHANGE SETTING OF MOTION SENSOR ⌇S305

END

# FIG.14

```
                    ┌─────────────┐
                    │    START    │
                    └──────┬──────┘
                           │
  ┌───────────────────────▼──────────────────────────┐  ⌐S401
  │        ACQUIRE COORDINATES OF MOVING OBJECT       │
  └───────────────────────┬──────────────────────────┘
                           │                             ⌐S402
  ┌───────────────────────▼──────────────────────────┐
  │            PERFORM FREQUENCY ANALYSIS OF          │
  │            DATA INDICATED ON COORDINATES          │
  └───────────────────────┬──────────────────────────┘
                           │
              ┌────────────▼─────────────┐              ⌐S403
     NO       │     IS HIGH-FREQUENCY     │
  ◄───────────│  COMPONENT INCLUDED IN DATA ON
              │       COORDINATES?        │
              └────────────┬─────────────┘
                           │ YES
              ┌────────────▼─────────────┐              ⌐S404
     NO       │       IS DISTANCE        │
  ◄───────────│  BETWEEN MOVING OBJECT AND
              │   MOTION SENSOR LESS      │
              │     THAN THRESHOLD?       │
              └────────────┬─────────────┘
                           │ YES
  ┌───────────────────────▼──────────────────────────┐  ⌐S405
  │   DETERMINE THAT MOVING OBJECT IS OBJECT THAT IS  │
  │               NOT TO BE DETECTED                  │
  └───────────────────────┬──────────────────────────┘
                           │                             ⌐S406
  ┌───────────────────────▼──────────────────────────┐
  │          CHANGE SETTING OF MOTION SENSOR          │
  └───────────────────────┬──────────────────────────┘
                           │
                    ┌──────▼──────┐
                    │     END     │
                    └─────────────┘
```

# FIG.15

## INTERNATIONAL SEARCH REPORT

| International application No. |
| --- |
| **PCT/JP2023/034758** |

**A. CLASSIFICATION OF SUBJECT MATTER**

*G01S 13/42*(2006.01)i; *G01S 7/41*(2006.01)i
FI:  G01S13/42; G01S7/41

According to International Patent Classification (IPC) or to both national classification and IPC

**B. FIELDS SEARCHED**

Minimum documentation searched (classification system followed by classification symbols)

G01S7/00 - G01S7/64; G01S13/00 - G01S17/95; B60R25/31

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-188651 A (AISHIN KK) 21 December 2022 (2022-12-21)<br>entire text, all drawings | 1-5 |
| A | JP 2022-182341 A (SUBARU CORP.) 08 December 2022 (2022-12-08)<br>entire text, all drawings | 1-5 |
| A | WO 2023/127072 A1 (MITSUBISHI ELECTRIC CORPORATION) 06 July 2023 (2023-07-06)<br>entire text, all drawings | 1-5 |
| A | JP 2023-111838 A (YUPITERU CORP.) 10 August 2023 (2023-08-10)<br>entire text, all drawings | 1-5 |
| A | CN 113640792 A (NANJING UNIVERSITY OF SCIENCE AND TECHNOLOGY) 12 November 2021 (2021-11-12)<br>entire text, all drawings | 1-5 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

| International application No. |
|---|
| **PCT/JP2023/034758** |

| Patent document cited in search report | | | Publication date (day/month/year) | Patent family member(s) | | | Publication date (day/month/year) |
|---|---|---|---|---|---|---|---|
| JP | 2022-188651 | A | 21 December 2022 | US | 2022/0397643 | A1 | |
| | | | | entire text, all drawings | | | |
| | | | | DE | 102022113806 | A1 | |
| JP | 2022-182341 | A | 08 December 2022 | (Family: none) | | | |
| WO | 2023/127072 | A1 | 06 July 2023 | (Family: none) | | | |
| JP | 2023-111838 | A | 10 August 2023 | (Family: none) | | | |
| CN | 113640792 | A | 12 November 2021 | (Family: none) | | | |

Form PCT/ISA/210 (patent family annex) (January 2015)

**REFERENCES CITED IN THE DESCRIPTION**

**Patent documents cited in the description**

• JP 2003207462 A